# EUROPÄISCHE PATENTANMELDUNG

(11) **EP 4 793 073 A1**
(43) Veröffentlichungstag der Anmeldung: **19.08.2026**
(21) Anmeldenummer: 25158513.9
(22) Anmeldetag: 18.02.2025
(51) Int. Cl.: B60K 1/04

(54) **KRAFTFAHRZEUG UMFASSEND EINE HOCHVOLTBATTERIE**

(71) Anmelder: MAGNA STEYR Fahrzeugtechnik GmbH & Co KG, 8041 Graz (AT)
(72) Erfinder: ERLACHER, Manuel, 9545 Radenthein (AT); RASTL, Philipp, 8510 Stainz (AT); SCHWARZL, Werner, 8301 Laßnitzhöhe (AT)
(74) Vertreter: Zangger, Bernd

(57) **Zusammenfassung**

Ein Kraftfahrzeug umfassend eine Hochvoltbatterie (1) als Antriebsbatterie für einen elektrischen Antriebsmotor, wobei das Kraftfahrzeug ein Bodengruppenelement (2) umfasst das sich in Fahrzeugquerrichtung über die Breite des Kraftfahrzeugs erstreckt, insbesondere einen Sitzquerträger (3) und/oder eine Bodenplatte (4) unterhalb eines Sitzquerträgers (3), wobei die Hochvoltbatterie (1) durch zumindest eine Schraube (5) an dem Bodengruppenelement (2) des Kraftfahrzeugs befestigt ist, wobei ein im Wesentlichen U-förmiger Ausgleichshalter (6) von unten am Bodengruppenelement (2) befestigt ist, so dass sich der Boden (7) der U-Form unten befindet und die Schenkel (8) der U-Form an dem Bodengruppenelement (2) befestigt sind, wobei die U-Form des U-förmigen Ausgleichshalters (6) in Fahrzeugquerrichtung (Y) ausgerichtet ist, wobei eine Mutter (9) zur Fixierung der Schraube (5) innerhalb des U-förmigen Ausgleichshalters (6) angeordnet ist.

## Beschreibung

### Gebiet der Erfindung

Die vorliegende Erfindung betrifft ein Kraftfahrzeug umfassend eine Hochvoltbatterie als Antriebsbatterie für einen elektrischen Antriebsmotor und die Art der Befestigung der Hochvoltbatterie am Kraftfahrzeug.

### Stand der Technik

Es ist bekannt, dass Hochvoltbatterien in Kraftfahrzeugen verwendet werden, um elektrische Energie für einen Antriebsmotor eines Kraftfahrzeugs, insbesondere in Elektro- oder Hybridfahrzeugen, zur Verfügung zu stellen. Eine Hochvoltbatterie weist üblicherweise ein Batteriegehäuse auf, in welchem die Batteriezellen angeordnet sind.

Hochvoltbatterien nehmen ein relativ großes Volumen ein, um eine möglichst hohe Speicherkapazität aufweisen zu können und werden daher möglichst platzsparend, beispielsweise im Bereich des Fahrzeugbodens, verbaut.

Insbesondere ist es bekannt, eine Hochvoltbatterie unterhalb einer Bodengruppe eines Kraftfahrzeugs anzuordnen und an den seitlichen Schwellern, also Längsträgern des Kraftfahrzeugs zu befestigen. Die Antriebsbatterien werden in der Montage von unten, mittels Schrauben an den Schwellern verschraubt.

Hochvoltbatterien, die an der Unterseite von Fahrzeugen montiert sind, können bei einem Crash, zum Beispiel bei einem Seitencrash oder bei einem Pfahltest, durch Verformung von Komponenten, eine Relativbewegung gegenüber dem Fahrzeug erfahren. Diese Verformungen können den Energiespeicher und auch die Unterseite des Fahrzeuges beschädigen und zu ungewünschten Verhalten der Komponenten führen, sowie auch zu Undichtigkeiten zwischen Energiespeicher und Innenraum führen.

### Zusammenfassung der Erfindung

Es ist eine Aufgabe der Erfindung, ein Kraftfahrzeug umfassend eine Hochvoltbatterie in dieser Hinsicht zu verbessern und insbesondere ein Kraftfahrzeug umfassend eine Hochvoltbatterie anzugeben, bei dem das Risiko, dass die Hochvoltbatterie oder wichtige andere Komponenten des Kraftfahrzeugs bei einem seitlichen Aufprall verformen und beschädigt werden, verringert ist.

Die Lösung der Aufgabe erfolgt durch ein Kraftfahrzeug umfassend eine Hochvoltbatterie als Antriebsbatterie für einen elektrischen Antriebsmotor, wobei das Kraftfahrzeug ein Bodengruppenelement umfasst das sich in Fahrzeugquerrichtung über die Breite des Kraftfahrzeugs erstreckt, insbesondere einen Sitzquerträger und/oder eine Bodenplatte unterhalb eines Sitzquerträgers, wobei die Hochvoltbatterie durch zumindest eine Schraube an dem Bodengruppenelement des Kraftfahrzeugs befestigt ist, wobei ein im Wesentlichen U-förmiger Ausgleichshalter von unten am Bodengruppenelement befestigt ist, so dass sich der Boden der U-Form unten befindet und die Schenkel der U-Form an dem Bodengruppenelement befestigt sind, wobei die U-Form des U-förmigen Ausgleichshalters in Fahrzeugquerrichtung ausgerichtet ist, wobei eine Mutter zur Fixierung der Schraube innerhalb des U-förmigen Ausgleichshalters angeordnet ist. Erfindungsgemäß ist somit eine Hochvoltbatterie unterhalb einer Bodengruppe eines Kraftfahrzeuges montiert, nämlich an einem Bodengruppenelement, insbesondere an einem planaren Bodengruppenelement, dass sich in Fahrzeugquerrichtung über die Breite des Kraftfahrzeugs erstreckt. Dieses Bodengruppenelement kann insbesondere ein Sitzquerträger sein oder eine Bodenplatte, beispielsweise ein Bodenblech, die sich unterhalb eines Sitzquerträgers befindet.

Ein U-förmiges Bauteil, der Ausgleichshalter, wird unten an diesem Bodengruppenelement montiert, bevorzugt angeschraubt und erstreckt sich in seiner U-form in Fahrzeugquerrichtung, also von der linken zur rechten Seite des Kraftfahrzeugs. Auch ein Ausgleichshalter der in Fahrzeuglängsrichtung eine vordere und/oder hintere Abdeckung aufweist, beispielsweise einen Quader oder einen Würfel bildet, wird als U-förmig in Fahrzeugquerrichtung angesehen und somit als "U-förmig" im Rahmen der Erfindung angesehen. Der Ausgleichshalter kann insbesondere ein Blechbauteil sein und somit ein Ausgleichsblech sein.

Durch den Einsatz eines im Wesentlichen U-förmigen Ausgleichshalters zur Aufnahme des Endes einer Schraube, an dem die Mutter befestigt ist, wird bei einem seitlichen Crash im Wesentlichen nur dieses Bauteil, der Ausgleichshalter, verformt und die Verbindungsstelle zwischen Hochvoltbatterie und Aufbau des Kraftfahrzeugs entlastet.

Weiterbildungen der Erfindung sind in den abhängigen Ansprüchen, der Beschreibung sowie den beigefügten Zeichnungen angegeben.

Vorzugsweise sind die Schenkel der U-Form über Flanschbereiche der Schenkel der U-Form an dem Bodengruppenelement befestigt, wobei die

Flanschbereiche parallel zum Bodengruppenelement verlaufen und an diesem bevorzugt anliegen.

Die Flanschbereiche der Schenkel der U-Form sind bevorzugt mit dem Bodengruppenelement verschweißt, vernietet oder verschraubt.

Bevorzugt ist die Schraube durch ein Loch im Boden des U-förmigen Ausgleichshalters nach oben in den U-förmigen Ausgleichshalter geführt und oberhalb des Lochs, im Ausgleichshalter, mit der Mutter verschraubt.

Die Schraube erstreckt sich bevorzugt durch die gesamte Höhe der Hochvoltbatterie.

Bevorzugt ist die Schraube in einer Hülse angeordnet. Die Hülse reicht bevorzugt über die gesamte Höhe der Hochvoltbatterie.

Vorzugsweise ist die Schraube über die Höhe der Antriebsbatterie in einer Hülse angeordnet. Durch die Lagerung in der Hülse, kann eine Ausgleichsbewegung der Schraube innerhalb der Hochvoltbatterie in der X-Y Ebene des Kraftfahrzeugs ermöglicht sein.

Bevorzugt ist die Hochvoltbatterie durch zumindest zwei derartige Schrauben an dem Bodengruppenelement des Kraftfahrzeugs befestigt. Dabei ist jeweils eine Mutter zur Fixierung der jeweiligen Schraube innerhalb eines jeweiligen U-förmigen Ausgleichshalters angeordnet.

Die zumindest zwei Schrauben sind vorzugsweise an verschiedenen Positionen in Fahrzeugquerrichtung im Kraftfahrzeug angeordnet. Beispielsweise kann eine Schraube unterhalb eines linken Sitzes und eine weitere Schraube unterhalb eines rechten Sitzes angeordnet sein. Bevorzugt sind die zumindest zwei Schrauben an der selben Position in Fahrzeuglängsrichtung angeordnet. Alternativ können zwei oder mehr Schrauben auch in Längsrichtung zueinander versetzt sein.

In einer Ausführungsform ist die Schraube etwa in der Mitte in Fahrzeugquerrichtung des Kraftfahrzeugs angeordnet. Wenn zumindest zwei Schrauben vorhanden sind, können diese in einem mittleren Bereich in Fahrzeugquerrichtung des Kraftfahrzeugs, zwischen zwei seitlichen Schwellern angeordnet sein, bevorzugt symmetrisch zur Mitte in Fahrzeugquerrichtung des Kraftfahrzeugs.

Vorzugsweise ist die Antriebsbatterie, zusätzlich zur Befestigung an dem Bodengruppenelement des Kraftfahrzeugs über die Schraube oder über mehrere Schrauben mit jeweiligen Ausgleichshaltern, mittels seitlicher Verschraubungen an jedem von zwei seitlichen Schwellern des Kraftfahrzeugs befestigt. Diese seitlichen Verschrauben weisen bevorzugt keine Ausgleichshalter auf. Die Muttern der seitlichen Verschraubungen sind bevorzugt in dem jeweiligen Schweller angeordnet.

Das Bodengruppenelement kann zu einer Aluminium-Bodengruppe gehören und im Wesentlichen aus Aluminium gebildet sein. Alternativ kann das Bodengruppenelement zu einer Stahl-Bodengruppe gehören und im Wesentlichen aus Stahl gebildet sein.

### Kurzbeschreibung der Zeichnungen

Die Erfindung wird im Folgenden beispielhaft unter Bezugnahme auf die Zeichnungen beschrieben.
- Fig. 1: ist eine schematische Schnittansicht eines nichterfindungsgemäßen Kraftfahrzeugs im Bereich der Hochvoltbatterie.
- Fig. 2: ist eine Detailansicht der Schraubverbindung gemäß dem in Fig. 1 umrahmten Ausschnitt.
- Fig. 3: ist eine schematische Darstellung eines Kraftfahrzeugs gemäß Fig. 1 vor einem seitlichen Aufprall bei einem Pfahltest (Pole-Test).
- Fig. 4: ist eine schematische Darstellung gemäß Fig. 3 nach einem seitlichen Aufprall bei einem Pfahltest (Pole-Test).
- Fig. 5: ist eine schematische Schnittansicht eines Bauteils, nämlich eines Ausgleichshalters, welches erfindungsgemäß an der Unterseite des Kraftfahrahrzeugs befestigt ist, vor einem seitlichen Aufprall.
- Fig. 6: ist eine schematische Schnittansicht des Bauteils gemäß Fig. 5, nämlich eines Ausgleichshalters, nach einem seitlichen Aufprall.
- Fig. 7: ist eine schematische Darstellung eines Kraftfahrzeugs gemäß Fig. 3 vor einem seitlichen Aufprall bei einem Pfahltest (Pole-Test), jedoch erfindungsgemäß mit einem Ausgleichshalter ausgestattet.
- Fig. 8: ist eine schematische Darstellung eines Kraftfahrzeugs gemäß Fig. 4 nach einem seitlichen Aufprall bei einem Pfahltest (Pole-Test), jedoch erfindungsgemäß mit einem Ausgleichshalter ausgestattet.
- Fig. 9: ist eine schematische Darstellung eines herkömmlichen Sitzquerträgers im y-Schnitt.
- Fig. 10: ist eine schematische Schnittansicht des Verbindungsbereichs eines erfindungsgemäßen Kraftfahrzeugs mit einer Aluminium-Bodengruppe im y-Schnitt.
- Fig. 11: ist eine schematische Schnittansicht des Verbindungsbereichs eines erfindungsgemäßen Kraftfahrzeugs mit einer Aluminium-Bodengruppe gemäß Fig. 10, jedoch im x-Schnitt.
- Fig. 12: ist eine dreidimensionale Darstellung des Ausgleichshalters von Fig. 10 und Fig. 11.
- Fig. 13: ist eine schematische Schnittansicht des Verbindungsbereichs eines erfindungsgemäßen Kraftfahrzeugs mit einer Stahl-Bodengruppe im y-Schnitt.
- Fig. 14: ist eine schematische Schnittansicht des Verbindungsbereichs eines erfindungsgemäßen Kraftfahrzeugs mit einer Stahl-Bodengruppe gemäß Fig. 13, jedoch im x-Schnitt.
- Fig. 15: ist eine dreidimensionale Darstellung des Ausgleichshalters von Fig. 13 und Fig. 14.

### Detaillierte Beschreibung der Erfindung

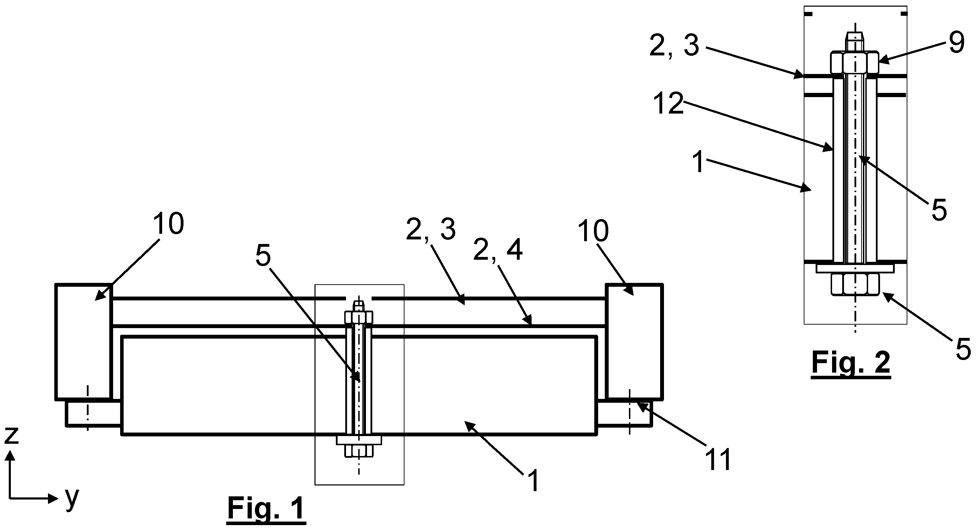

In Fig. 1 ist ein nicht-erfindungsgemäßes Kraftfahrzeug im Bereich einer Hochvoltbatterie 1 dargestellt.

Von dem Kraftfahrzeug sind in Fig. 1 Sitzquerträger 3 eines Bodengruppenelements 2 dargestellt, sowie seitliche Schweller 10. Ein Energiespeicher, nämlich die Hochvoltbatterie 1, ist an einer Verbindungsstelle (in Fig. 1 umrahmt dargestellt und in Fig. 2 im Detail gezeigt) mit einer Schraube 5 an der Bodengruppe, also am Bodengruppenelement 2, nämlich an einem Sitzquerträger 3, befestigt. Die Schraube 5 kann sich in einer Hülse 12 befinden.

Zusätzlich ist die Hochvoltbatterie 1 mittels seitlicher Verschraubungen 11 zwischen seitlichen Befestigungsbereichen der Hochvoltbatterie und dem Schweller 10 befestigt. Es sind an jeder Seite des Kraftfahrzeugs mehrere seitliche Verschraubungen 11 entlang des Schwellers 10 eingerichtet.

Fig. 2 zeigt eine detailliertere Ansicht der Verbindungsstelle und somit der Schraube 5, in einer Hülse 12, die sich über die Höhe der Hochvoltbatterie 1, durch die gesamte Hochvoltbatterie 1, erstreckt. Die Schraube ist mit einer Mutter 9 befestigt, die jenseits einer Bodenplatte des Bodengruppenelements 2 angeordnet ist.

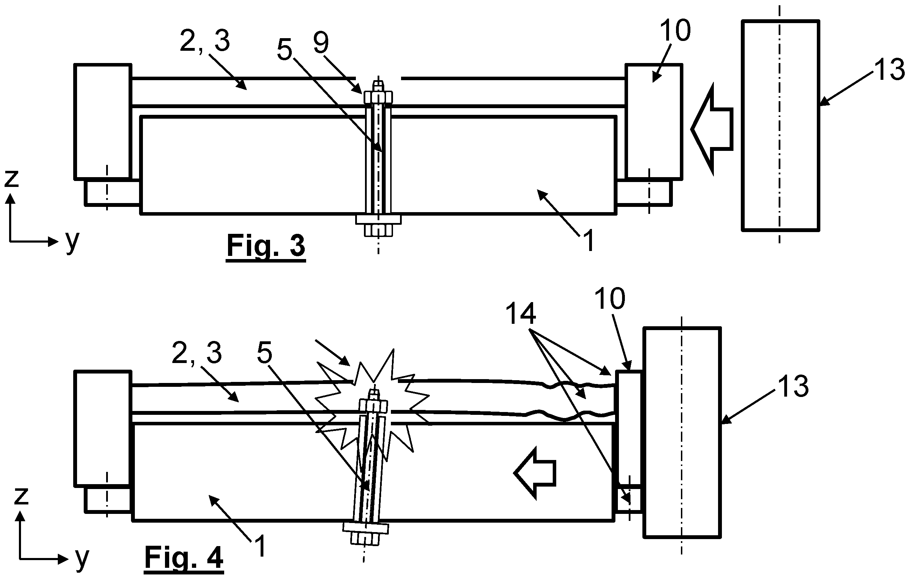

Fig. 2 und Fig. 3 zeigen ein Problem, das mit einer Ausbildung eines Kraftfahrzeugs gemäß Fig. 1 und Fig. 2 verbunden ist.

Fig. 3 zeigt die Anordnung der Hochvoltbatterie 1 im Kraftfahrzeug vor einem seitlichen Aufprall (in der eingezeichneten Pfeilrichtung) eines Pfahls 13 in einem Pfahltest (Pole-Test). Die Mutter 9 der Schraube 5 befindet sich hier in einem teilweise zum Innenraum hin offenen Bereich der Bodengruppe 2, so dass eine aufwändige Abdichtung im Bereich der Schraube 5 zum Innenraum des Kraftfahrzeugs hin erforderlich ist.

Fig. 4 zeigt die Deformation dieser Anordnung nach dem seitlichen Aufprall des Pfahls 13 beim Pole-Test. Durch den Crash wird der Energiespeicher, also die Hochvoltbatterie 1, relativ zum übrigen Fahrzeug verschoben (Pfeil in Fig. 4) und dies führt zu einer ungewollten Verformung 14, zum Ausreißen der Verschraubung 5, und zu Undichtigkeiten im Bereich der Schraube 5 und der Mutter 9 der Schraube 5 zum Innenraum des Kraftfahrzeugs hin.

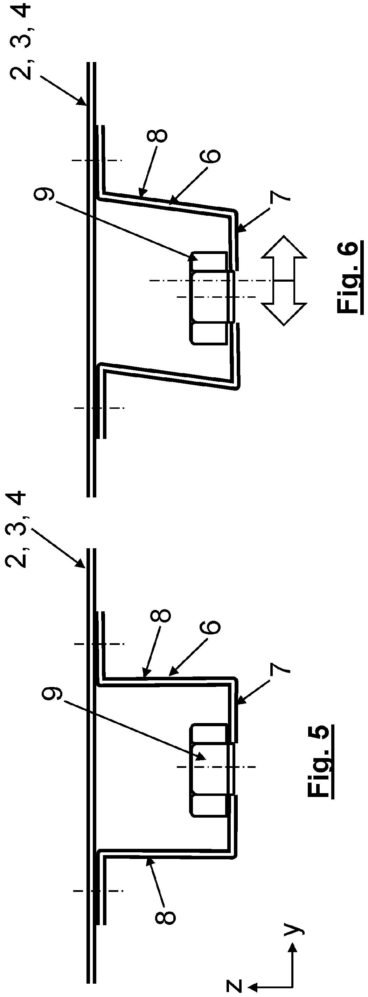

Fig. 5 zeigt schematisch das Funktionsprinzip der Erfindung und das wesentliche Bauteil, den Ausgleichshalter 6, welcher an der Unterseite des Fahrzeugs, nämlich an der Unterseite des Bodengruppenelements 2, befestigt ist. Es handelt sich um ein im Wesentlichen U-förmiges Bauteil, bevorzugt Blech, welches die Hauptlast der Verbindung zum Energiespeicher in vertikaler Richtung überträgt. Durch Änderung des Winkels der Schenkel 8 des Ausgleichshalters 6, kann die Last, welche in y-Richtung übertragen werden kann, geändert werden. Dieses Bauteil kann zum Beispiel am Unterboden einer Bodengruppe, insbesondere eines Sitzquerträgers 3 und/oder eines Bodenblechs 4, bevorzugt mit Schweißpunkten befestigt sein. Durch die abgesenkte Verbindungsstelle zum Energiespeicher also der Hochvoltbatterie 1 - hier als Einnietmutter abgebildet -, wird auch keine Bohrung in den Innenraum des Kraftfahrzeugs in einer Bodenplatte 4, beispielsweise einem Bodenblech, benötigt, sodass die Dichtigkeit zwischen der Unterseite des Fahrzeugs und dem Innenraum gewährleistet ist.

Fig. 6 zeigt den Ausgleichshalter 6 nach einem Crash, also nach einem seitlichen Anprall, mit einer relativ zum Fahrzeug verschobenen Verbindungsstelle und somit verschobener Schraube 5 und Mutter 9. Die Verschiebung betrifft hauptsächlich die y-Richtung des Fahrzeugs, und kann auch beispielsweise eine geringere Komponente in z-Richtung aufweisen. Durch den Ausgleichshalter 6 ist ein Ausgleich in Y-Richtung, in Richtung des in Fig. 6 eingezeichneten Pfeils, möglich.

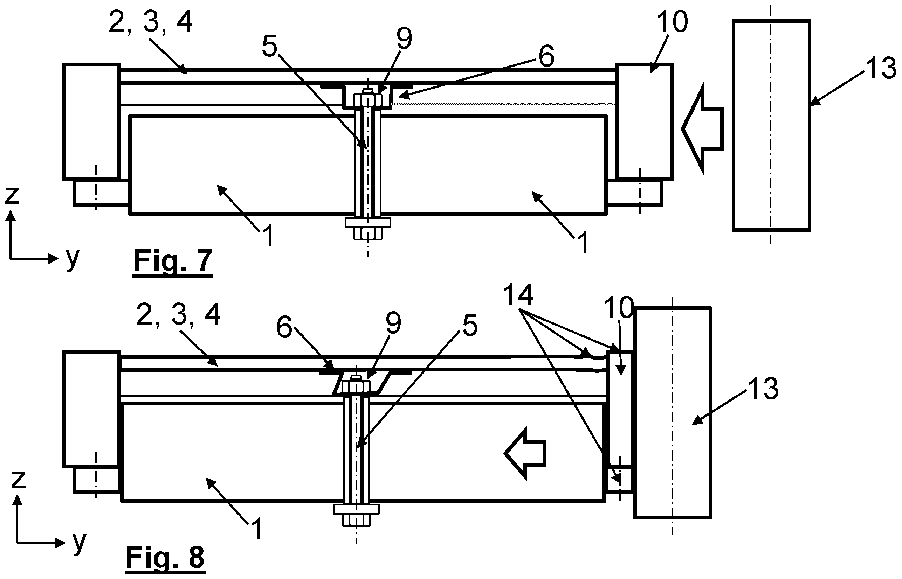

Dieses Prinzip wird in der erfindungsgemäßen Lösung genutzt, die in Fig. 7 wiederum vor einem seitlichen Anprall eines Pfahls 13 und in Fig. 8 nach einem Anprall des Pfahls 13 dargestellt ist. In Fig. 7 ist - im Unterschied zu Fig. 3 - nun ein Ausgleichshalter 6 an der Unterseite der Bodengruppe 2 befestigt, in welchem die Mutter 9 der Verschraubung der Hochvoltbatterie 1 aufgenommen ist. Bei einer seitlichen Krafteinwirkung, in Richtung des in Fig. 7 eingezeichneten Pfeils, kommt es, wie in Fig. 8 dargestellt, zu einer Verformung des Ausgleichshalters 6, bei der die Seitenwände des Ausgleichshalters 6 schräg oder schräger gestellt werden als zuvor. Eine unerwünschte Verformung anderer Komponenten an der Verbindungsstelle, insbesondere im Bereich der Mutter 9, sowie seitliche Verformungen 14 im Bereich des Schwellers 10 an der Aufprallseite werden reduziert.

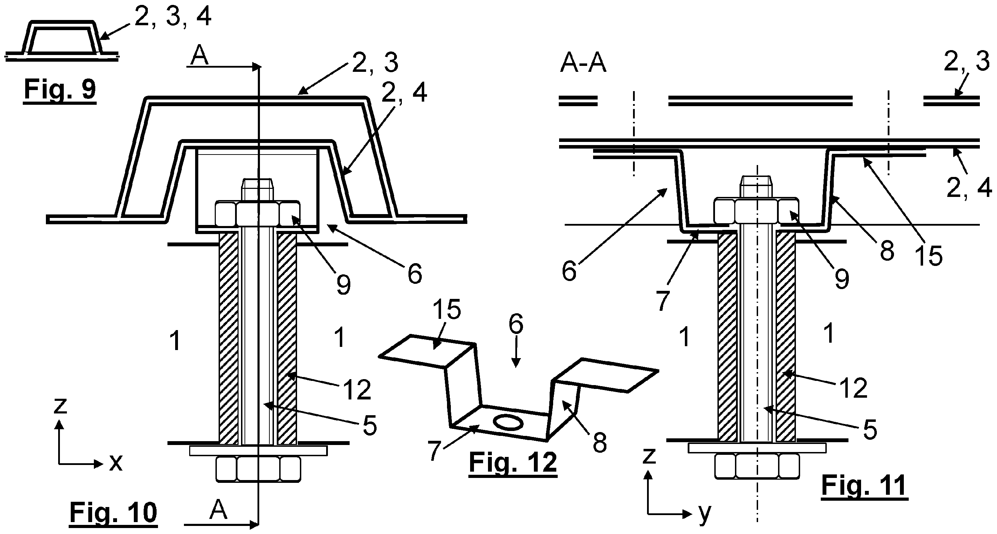

In den Fig. 9 bis Fig. 12 wird der Einsatz eines Ausgleichshalters 6 in einem Fahrzeug mit einer Aluminium-Bodengruppe dargestellt.

Fig. 9 zeigt zunächst eine einfache schematische Darstellung in einem y-Schnitt eines herkömmlichen Bauteils einer Bodengruppe bzw. eines Bodengruppenelements 2 aus Aluminium, das einen Sitzquerträger 3 und eine Bodenplatte 4 ausbildet. Die Bodenplatte 4 verläuft dabei in einer Ebene parallel zum Boden des Kraftfahrzeugs und zur Fahrbahn.

Fig. 10 zeigt eine mögliche Anordnung eines Ausgleichshalters 6 in einem Fahrzeug mit Aluminium-Bodengruppe im y-Schnitt. Die Bodenplatte 4 weist dabei eine Einbuchtung gegenüber der sonstigen Ebene der Bodenplatte 4 auf, so dass der Ausgleichshalter 6 nach oben versetzt und somit in die Höhe des Bodengruppenelements 2 hinein versetzt angeordnet ist und somit in Z-Richtung innerhalb des Bauraums der Bodengruppe bzw. des Sitzquerträgers 3 untergebracht ist. Durch die Integration in den Sitzquerträger 3 nimmt das Bauteil nicht viel Platz in Anspruch und ist gut in das Kraftfahrzeug integriert.

Fig. 11 zeigt das selbe Kraftfahrzeug der Fig. 10 in einem x-Schnitt. Die U-Form des Ausgleichshalters 6 erstreckt sich in der dargestellten Y-Richtung des Kraftfahrzeugs. Die Schraube 5 erstreckt sich über die Höhe der Hochvoltbatterie 1 und ist im Inneren einer Hülse 12 angeordnet, die sich über die Höhe der Hochvoltbatterie 1 bis zur Unterseite des Bodens 7 des Ausgleichshalters 6 erstreckt. Die Mutter 9 zur Fixierung der Schraube 5 ist im Inneren der U-Form des Ausgleichshalters 6 angeordnet.

Fig. 12 zeigt das Bauteil, nämlich den Ausgleichshalter 6, der in Fig. 10 und Fig. 11 verwendet ist, in einer dreidimensionalen Darstellung. Der Ausgleichshalter 6 weist Schenkel 8 der U-Form auf, die über Flanschbereiche 15 der Schenkel 8 der U-Form an dem Bodengruppenelement 2 befestigbar sind, wobei die Flanschbereiche 15 bei befestigtem Ausgleichshalter 6, wie in Fig. 11 dargestellt, parallel zum Bodengruppenelement 2, bevorzugt zu einer Bodenplatte 4 des Bodengruppenelements 2, verlaufen und an diesem anliegen. Die Flanschbereiche 15 können beispielsweise verschweißt, vernietet oder verschraubt sein.

Der Ausgleichshalter 6 weist ein Loch im Boden 7 auf, durch welches die Schraube 5 in den Innenraum von Ausgleichshalter 6 und Mutter 9 geführt ist.

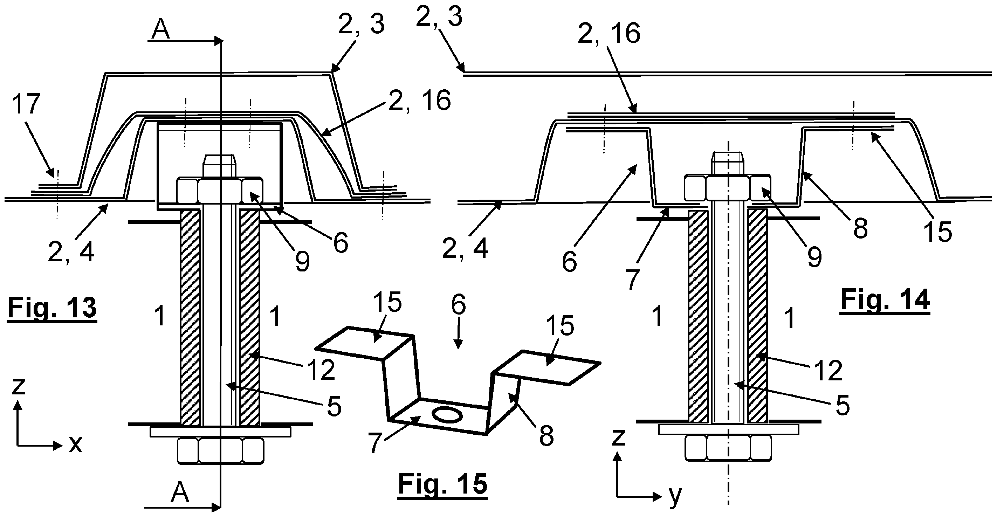

Der mögliche Y-Ausgleich durch einen Ausgleichshalter 6 in einem Kraftfahrzeug mit einer Stahl-Bodengruppe bzw. einem Stahl-Bodengruppenelement 2 ist in den Fig. 13 bis Fig. 15 dargestellt.

Dabei zeigt Fig. 13 eine mögliche Anordnung eines Ausgleichshalters 6 in einem Fahrzeug mit einem Bodengruppenelement 2 aus Stahl im y-Schnitt. Verprägungen, nämlich Verformungen nach Innen, sind am Bodenblech, also der Bodenplatte 4, des Bodengruppenelements 2 ausgebildet, so dass das Bauteil nicht viel Platz in Anspruch nimmt und gut integriert ist. Optional kann die Bodenbaugruppe, bevorzugt das Bodengruppenelement 2, ein zusätzliches Verstärkungsblech 16 umfassen, dass bevorzugt zwischen dem Bodenblech, also der Bodenplatte 4 und dem Sitzquerträger 3 angeordnet sein kann. Die drei Bleche, Sitzquerträger 3, Bodenplatte 4 und Verstärkungsblech 16, können über eine Dreiblechverbindung 17 miteinander verbunden sein.

Fig. 14 zeigt den Aufbau gemäß Fig. 13 in einem x-Schnitt und Fig. 15 zeigt wieder dreidimensional den Ausgleichshalter 6, der in der Ausführung gemäß Fig. 13 und Fig. 14 eingesetzt werden kann.

In der dargestellten Lösung werden somit ein oder mehrere Ausgleichshalter 6 an einem vorzugsweise planaren Bodengruppenelement 2, insbesondere an einer Bodenplatte 4, angebracht, vorzugsweise unter einem Sitzquerträger 4 montiert. Dabei können mehrere Schraubpunkte in Querrichtung des Fahrzeugs mit Ausgleichshaltern 6 ausgeführt werden, beispielsweise einer in Querrichtung unter einem Fahrersitz und ein weiterer unter einem Beifahrersitz. Hierdurch kann eine sehr gute und sichere Einbindung einer Hochvoltbatterie 1 in ein Kraftfahrzeug erreicht werden, bei einem geringen Bauraum.

### Bezugszeichenliste

- 1: Hochvoltbatterie
- 2: Bodengruppenelement
- 3: Sitzquerträger
- 4: Bodenplatte
- 5: Schraube
- 6: Ausgleichshalter
- 7: Boden der U-Form
- 8: Schenkel der U-Form
- 9: Mutter
- 10: Schweller
- 11: Seitliche Verschraubung Hochvoltbatterie-Schweller
- 12: Hülse
- 13: Pfahl
- 14: Verformung
- 15: Flanschbereich
- 16: Verstärkungsblech
- 17: Dreiblechverbindung

- X: X-Richtung des Kraftfahrzeugs
- Y: Y-Richtung des Kraftfahrzeugs
- Z: Z-Richtung des Kraftfahrzeugs

## Patentansprüche

1. Kraftfahrzeug umfassend eine Hochvoltbatterie (1) als Antriebsbatterie für einen elektrischen Antriebsmotor, wobei das Kraftfahrzeug ein Bodengruppenelement (2) umfasst das sich in Fahrzeugquerrichtung über die Breite des Kraftfahrzeugs erstreckt, insbesondere einen Sitzquerträger (3) und/oder eine Bodenplatte (4) unterhalb eines Sitzquerträgers (3), wobei die Hochvoltbatterie (1) durch zumindest eine Schraube (5) an dem Bodengruppenelement (2) des Kraftfahrzeugs befestigt ist,
**dadurch gekennzeichnet, dass** ein im Wesentlichen U-förmiger Ausgleichshalter (6) von unten am Bodengruppenelement (2) befestigt ist, so dass sich der Boden (7) der U-Form unten befindet und die Schenkel (8) der U-Form an dem Bodengruppenelement (2) befestigt sind, wobei die U-Form des U-förmigen Ausgleichshalters (6) in Fahrzeugquerrichtung (Y) ausgerichtet ist, wobei eine Mutter (9) zur Fixierung der Schraube (5) innerhalb des U-förmigen Ausgleichshalters (6) angeordnet ist.

2. Kraftfahrzeug nach Anspruch 1,
**dadurch gekennzeichnet , dass** die Schenkel (8) der U-Form über Flanschbereiche (15) der Schenkel (8) der U-Form an dem Bodengruppenelement (2) befestigt sind, wobei die Flanschbereiche (15) parallel zum Bodengruppenelement (2) verlaufen und an diesem bevorzugt anliegen.

3. Kraftfahrzeug nach Anspruch 2,
**dadurch gekennzeichnet , dass** die Flanschbereiche (15) der Schenkel (8) der U-Form mit dem Bodengruppenelement (2) verschweißt, vernietet oder verschraubt sind.

4. Kraftfahrzeug nach zumindest einem der vorhergehenden Ansprüche,
**dadurch gekennzeichnet , dass** die Schraube (5) durch ein Loch im Boden (7) des U-förmigen Ausgleichshalters (6) nach oben in den U-förmigen Ausgleichshalter (6) geführt ist.

5. Kraftfahrzeug nach zumindest einem der vorhergehenden Ansprüche,
**dadurch gekennzeichnet , dass** sich die Schraube (5) durch die gesamte Höhe der Hochvoltbatterie (1) erstreckt.

6. Kraftfahrzeug nach zumindest einem der vorhergehenden Ansprüche,
**dadurch gekennzeichnet , dass** die Schraube (5) in einer Hülse (12) angeordnet ist.

7. Kraftfahrzeug nach zumindest einem der vorhergehenden Ansprüche,
**dadurch gekennzeichnet , dass** die Hochvoltbatterie (1) durch zumindest zwei Schrauben (5) an dem Bodengruppenelement (2) des Kraftfahrzeugs befestigt ist, wobei jeweils eine Mutter (9) zur Fixierung der jeweiligen Schraube (5) innerhalb eines jeweiligen U-förmigen Ausgleichshalters (6) angeordnet ist.

8. Kraftfahrzeug nach Anspruch 7,
**dadurch gekennzeichnet , dass** die zumindest zwei Schrauben (5) an verschiedenen Positionen in Fahrzeugquerrichtung im Kraftfahrzeug angeordnet sind, beispielsweise unterhalb eines linken Sitzes und unterhalb eines rechten Sitzes, wobei bevorzugt die zumindest zwei Schrauben (5) an der selben Position in Fahrzeuglängsrichtung angeordnet sind.

9. Kraftfahrzeug nach zumindest einem der vorhergehenden Ansprüche,
**dadurch gekennzeichnet , dass** die Schraube (5) etwa in der Mitte in Fahrzeugquerrichtung des Kraftfahrzeugs angeordnet ist oder dass die zumindest zwei Schrauben (5) in einem mittleren Bereich in Fahrzeugquerrichtung des Kraftfahrzeugs zwischen zwei seitlichen Schwellern (10) angeordnet sind, bevorzugt symmetrisch zur Mitte in Fahrzeugquerrichtung des Kraftfahrzeugs.

10. Kraftfahrzeug nach zumindest einem der vorhergehenden Ansprüche,
**dadurch gekennzeichnet , dass** die Hochvoltbatterie (1), zusätzlich zur Befestigung an dem Bodengruppenelement (2) des Kraftfahrzeugs über die Schraube (5), mittels seitlicher Verschraubungen (11) an jedem von zwei seitlichen Schwellern (10) des Kraftfahrzeugs befestigt ist.

11. Kraftfahrzeug nach zumindest einem der vorhergehenden Ansprüche,
**dadurch gekennzeichnet , dass** das Bodengruppenelement (2) zu einer Aluminium-Bodengruppe gehört und im Wesentlichen aus Aluminium gebildet ist oder dass das Bodengruppenelement (2) zu einer Stahl-Bodengruppe gehört und im Wesentlichen aus Stahl gebildet ist.
